# FASCICULE DE BREVET EUROPEEN

(11) **EP 0 793 751 B1**
(45) Date de publication et mention de la délivrance du brevet: **06.02.2002**
(21) Numéro de dépôt: 96928508.9
(22) Date de dépôt: 13.08.1996
(51) Int. Cl.: D21H 27/40, B31F 1/07

(54) **FEUILLE MULTICOUCHE ABSORBANTE ET SON PROCEDE DE FABRICATION**
MEHRSICHTIGES, ABSORBIERENDES BLATT, UND VERFAHREN ZU SEINER HERSTELLUNG
ABSORBENT MULTILAYER SHEET AND METHOD FOR MAKING SAME

(30) Priorité: 25.08.1995 FR 9510096
(43) Date de publication de la demande: 10.09.1997
(73) Titulaire: Georgia-Pacific France, 68320 Kunheim (FR)
(72) Inventeur: GRAFF, Pierre, F-68600 Wolfgantzen (FR)
(74) Mandataire: David, Daniel
(86) Numéro de dépôt international: FR9601281
(87) Numéro de publication internationale: WO9708386

(56) Documents cités:
- WO-A-95/35205
- FR-A- 2 684 598
- US-A- 3 867 225
- US-A- 4 320 162

## Description

La présente invention concerne le domaine des papiers absorbants à usage sanitaire et domestique.

L'invention concerne plus particulièrement une feuille multicouche pour des produits tel que du papier toilette, des mouchoirs, des serviettes, ou des chiffons d'essuyage, ainsi que le procédé de fabrication de cette feuille multicouche.

Dans l'industrie du papier sanitaire et domestique on utilise pour la réalisation des différents produits, un papier absorbant crêpé de faible poids tel que l'ouate de cellulose.

On profite de la capacité d'allongement de ce matériau, conférée par le crêpage, pour le gaufrer.

En effet, le gaufrage donne du bouffant à la feuille, et il induit une amélioration de l'absorption des liquides, du toucher et de la douceur.

On a cherché à augmenter d'avantage la capacité d'absorption en créant des feuilles multicouches obtenues en associant deux ou plusieurs feuilles, aussi appelées plis.

Le document US-A-3.867.225 décrit ainsi un procédé pour réaliser un tel produit consistant à gaufrer séparément deux feuilles d'ouate de cellulose selon un motif constitué de projections ou protubérances à raison de 2 à 30/cm², à appliquer une substance adhésive sur les sommets d'une partie de ces protubérances, à rapprocher les deux feuilles par les faces gaufrées, c'est-à-dire par les faces présentant les protubérances en relief, en disposant les protubérances de l'une imbriquées entre les protubérances de l'autre, et à lier, par de la colle, les sommets d'une feuille avec les zones en renfoncement de l'autre feuille.

Par les vides ménagés entre les deux feuilles, on réalise ainsi une structure multicouche ayant une capacité d'absorption accrue par rapport à des feuilles absorbantes non ainsi transformées.

Pour certaines applications du produit obtenu, dans lesquelles la douceur est un critère important, on souhaite éviter la présence d'un trop grand nombre de points de liaison entre les deux feuilles, car la surface totale liée lui est proportionnelle et celle-ci constitue un facteur important de rigidité.

L'encollage est réalisé par dépôt au moyen d'un cylindre encolleur; le nombre de points de liaison est égal à celui des protubérances de la feuilles recevant la colle.

Pour réduire ce nombre de points de liaison, on a proposé dans le document US-A-3.867.225 un encollage partiel par l'emploi d'un cylindre applicateur de colle dont la surface est creusée d'alvéoles.

Une telle solution s'est toutefois révélée difficilement praticable industriellement car elle conduit à un encrassement rapide des cylindres par agglomération de matière dans les alvéoles.

Le document US-A-4.320.162, décrit une structure de feuille multicouche constituée de deux feuilles gaufrées. Chaque feuille comprend un motif large de premières protubérances gaufrées relativement profondément, entourées d'un motif plus serré de deuxièmes protubérances gaufrées moins profondément.

Les deux feuilles sont associées, selon un premier exemple, par les sommets des premières protubérances, et, selon un deuxième mode de réalisation, par les sommets des premières saillies pour une feuille et les sommets des deuxièmes saillies pour l'autre feuille.

Une telle structure offre en théorie une volume de vide interne plus important que dans la disposition présentée dans le document US-A-3.867.225, puisqu'on joint les deux feuilles par les sommets des saillies.

Une feuille possédant une telle structure résiste toutefois moins bien à l'écrasement.

On constate en effet un affaissement des saillies, même sous une faible pression d'appui.

Afin de combiner les avantages des deux procédés évoqués ci-dessus, sans en présenter les inconvénients, il a déjà été proposé dans la demande de brevet français n°9407482, une feuille multicouche absorbante à au moins deux couches constituées, chacune, d'au moins une feuille gaufrée de papier absorbant crêpé, de poids compris entre 10 et 40 g/m² par feuille, avec une face externe formant la face externe de la feuille multicouche et une face interne, la face interne de la première couche comportant des premières et des deuxièmes protubérances, et la face interne de la deuxième couche comportant des troisièmes protubérances imbriquées entre les protubérances de la première couche, les deux couches étant liées entre elles par au moins une partie des sommets des protubérances de la première couche rendus solidaires par collage à la deuxième couche entre deux troisièmes protubérances.

Cette feuille multicouche se caractérise en ce que la liaison par collage est assurée par les sommets des premières protubérances de la première couche, les deuxièmes protubérances de la première couche présentant une hauteur inférieure à celle des premières protubérances et leurs sommets n'ayant pas reçu de substance adhésive.

Grâce à une telle conception, la résistance à l'écrasement de la feuille n'est pas pénalisée et sa rigidité est plus faible que celle d'une feuille comportant le même nombre de protubérances imbriquées et dans laquelle ces dernières sont toutes de la même hauteur.

La présente invention a pour but de proposer une feuille d'une conception similaire à celle qui vient d'être décrite dont elle conserve les caractéristiques physiques tout en conférant à son utilisateur une perception d'une épaisseur supérieure et d'une plus grande résistance.

Dans ce but, l'invention propose une feuille multicouche absorbante à au moins deux couches constituées chacune d'au moins une feuille gaufrée de papier absorbant crêpé, de poids compris entre 10 et 40g/m² par feuille, avec une face externe formant la face externe de la feuille multicouche et une face interne, la face interne de la première couche comportant des premières et des deuxièmes protubérances, et la face interne de la deuxième couche comportant des troisièmes protubérances imbriquées entre les protubérances de la première couche, les deux couches étant liées entre elles par au moins une partie des sommets des protubérances de la première couche rendus solidaires, par collage, de la deuxième couche entre deux troisièmes protubérances, caractérisée en ce que la première couche est une feuille double constituée par :
- une feuille intérieure dont la face interne comporte lesdites premières et deuxièmes protubérances,
- une feuille extérieure dont la face interne comporte des premières protubérances coïncidant avec lesdites premières protubérances de la feuille intérieure, et comporte des secondes protubérances coïncidant avec lesdites deuxièmes protubérances de la feuille intérieure ;
en ce que la liaison entre les couches est assurée par collage par les sommets des premières protubérances de la première couche et des deuxièmes protubérances de la feuille intérieure de la première couche, et en ce que les sommets des premières protubérances des feuilles intérieure et extérieure de la première couche sont liés par collage.

Selon d'autres caractéristiques de l'invention :
- la hauteur des deuxièmes protubérances de la feuille extérieure est au moins égale à 50 % de la hauteur des premières protubérances ;
- les premières protubérances sont réparties selon un motif espacé, plus d'une deuxième protubérance étant disposée entre deux premières protubérances successives ;
- la surface encollée des sommets des premières protubérances représente entre 0,1 et 20 % de la surface de la feuille ;
- ladite surface encollée représente entre 1 et 5 % de la surface totale de la feuille.
- la surface encollée des sommets des deuxièmes protubérances de la feuille intérieure de la première couche représente entre 0,1 et 20 % de la surface totale de la feuille ;
- la hauteur des troisièmes protubérances est inférieure ou égale à la hauteur des premières protubérances ;
- la deuxième couche comporte des quatrièmes protubérances dont la hauteur est au moins égale à 50 % de la hauteur des troisièmes protubérances ;
- les sommets des troisièmes protubérances forment une liaison par collage avec la première couche.

L'invention a également pour objet un procédé pour réaliser une feuille multicouche conforme aux enseignements de l'invention caractérisé en ce qu'il consiste :
- à gaufrer la feuille intérieure de la première couche pour y réaliser les premières et deuxièmes protubérances;
- à gaufrer la feuille extérieure de la première couche pour y réaliser les premières et deuxièmes protubérances ;
- à assembler les feuilles intérieure et extérieure pour constituer la première couche à feuille double ;
- à gaufrer la feuille de la deuxième couche pour y réaliser au moins lesdites troisièmes protubérances ;
- à déposer de la colle sur au moins une partie du sommet des premières et des deuxièmes protubérances de la feuille intérieure de la première couche ;
- à rapprocher la feuille double de la première couche de la feuille de la deuxième couche de façon que les premières et deuxièmes protubérances de la feuille double s'imbriquent entre les troisièmes protubérances de la deuxième couche, de manière que les sommets encollés des premières protubérances de la feuille intérieure de la première couche adhèrent aux sommets des premières protubérances de la feuille extérieure de la première couche et à la feuille de la deuxième couche entre deux troisièmes protubérances, et de manière que les sommets encollés des deuxièmes protubérances de la feuille intérieure de la première couche n'adhèrent qu'à la feuille de la deuxième couche entre deux troisièmes protubérances.

Selon d'autres caractéristiques du procédé:
- la feuille intérieure et la feuille extérieure de la première couche sont gaufrées simultanément sur un premier cylindre comportant à sa surface des premiers et deuxièmes éléments en relief, et en ce que les sommets des premières et des deuxièmes protubérances de la feuille intérieure de la première couche sont encollés simultanément par un rouleau applicateur de colle qui coopère avec le premier cylindre portant la feuille double gaufrée ;
- qu'il consiste à gaufrer la feuille de la deuxième couche sur un deuxième cylindre comportant au moins des troisièmes éléments en relief;
- la liaison par collage entre les deux couches est assurée au moyen d'un rouleau marieur qui coopère avec le premier cylindre portant la feuille double gaufrée et la feuille de la deuxième couche gaufrée imbriquées.

D'autres caractéristiques et avantages de l'invention apparaîtront à la lecture de la description détaillée qui va suivre pour la compréhension de laquelle on se reportera aux dessins annexés dans lesquels :
- la figure 1 est une vue partielle schématique et à grande échelle, depuis la face externe de la deuxième couche, d'une feuille multicouche réalisée conformément aux enseignements de l'invention ;
- la figure 2 est une vue en section partielle selon la ligne 2-2 de la figure 1 ;
- la figure 3 est un schéma illustrant une installation pour la mise en oeuvre du procédé de fabrication conforme aux enseignements de l'invention ;
- la figure 4 est une vue de détail en perspective qui illustre le motif des éléments en relief sur l'un des cylindres de gaufrage de l'installation de la figure 3 ;
- la figure 5 est un schéma en section par un plan axial qui illustre la coopération du cylindre de gaufrage des feuilles de la première couche avec le rouleau applicateur de colle ; et
- la figure 6 est une vue similaire à celle de la figure 5 qui illustre la coopération du cylindre portant la feuille double de la première couche et la feuille de la deuxième couche avec un rouleau marieur.

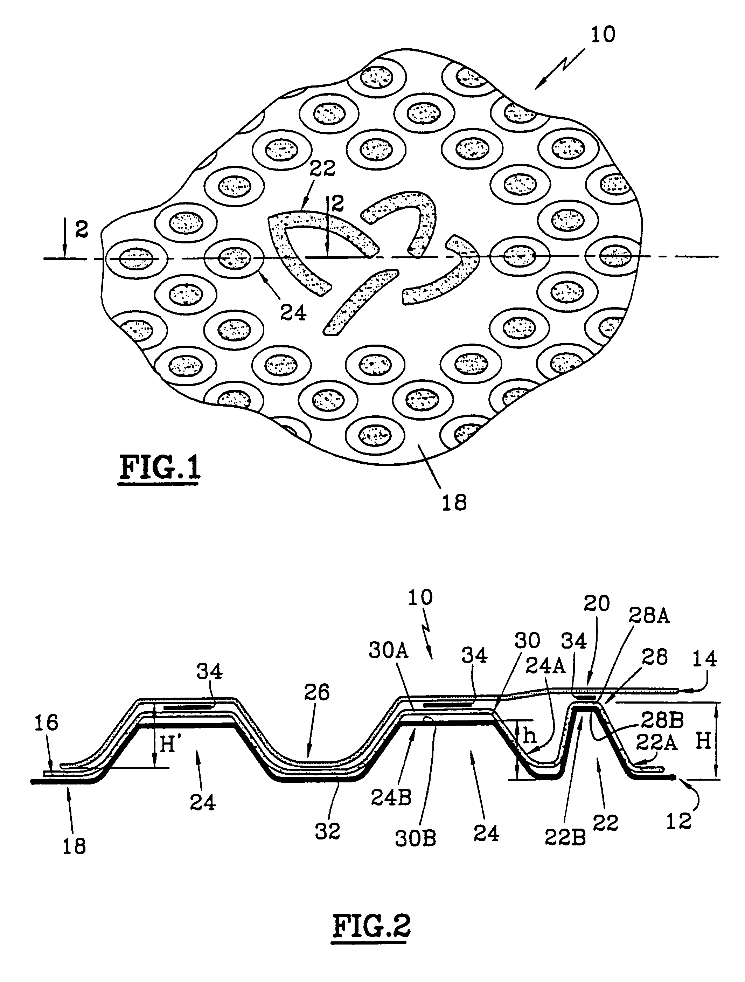

On a représenté aux figures 1 et 2 une feuille multicouche 10 constituée d'une première couche 12 et d'une deuxième couche 14.

La première couche 12 comporte une première feuille intérieure 16 et une seconde feuille extérieure 18 tandis que la deuxième couche comporte une seule feuille ou pli 20.

Chacune des feuilles 16, 18 et 20 est une feuille d'ouate de cellulose, papier crêpé absorbant utilisé comme papier sanitaire ou domestique de poids compris entre 10 et 40 g/m².

La feuille intérieure 16 constitue la face interne de la première couche 12 qui est tournée contre la face interne de la feuille unique 20 de la deuxième couche 14, tandis que la feuille extérieure 18 de la première couche 12 constitue la face externe de cette première couche.

Comme on peut le voir aux figures 1 et 2, les deux feuilles 16 et 18 de la première couche 12 sont gaufrées selon un même motif de protubérances qui comporte des premières protubérances 22 et des deuxièmes protubérances 24 qui font saillie à l'intérieure de la feuille multicouche 10, c'est-à-dire entre les deux couches 12 et 14. Les protubérances 22A de la feuille 16 coïncident avec les protubérances 22B de la feuille 18. De même, les protubérances 24A de la feuille 16, coïncident avec les protubérances 24B de la feuille 18.

Les premières protubérances 22 peuvent être de forme quelconque.

Elles sont avantageusement constituées de façon à former l'empreinte d'un dessin linéaire, par exemple celui d'une fleur telle que celle représentée sur la figure 1.

Les premières protubérances 22 et donc les empreintes de fleurs, sont relativement distantes les unes des autres.

Cet espacement sera fonction notamment de la surface occupée par le dessin sur la feuille.

Par exemple, pour un dessin s'inscrivant dans une surface de 100 mm², la distance entre deux dessins de fleurs est de l'ordre de 15 mm.

La hauteur H, également appelée profondeur, des premières protubérances 22 est comprise entre 1 et 2 mm.

Une valeur particulièrement appropriée, pour la réalisation d'un papier toilette à partie d'ouate de cellulose de poids compris entre 10 et 40 g/m², est comprise entre 1,2 et 1,5 mm, par exemple 1,3 mm.

Entre les premières protubérances 22 relativement éloignées les unes des autres, sont disposées les deuxièmes protubérances 24 en forme de picots.

Ces seconds éléments de la structure de la feuille multicouche 10 doivent remplir, comme les premiers éléments 22, la fonction de jambe de force, pour contribuer à la résistance à la compression de la feuille 10 et donner le volume.

Ils sont réalisés en grand nombre et répartis autour des premiers éléments 22 selon un motif beaucoup plus serré.

Conformément aux enseignements de l'invention, et comme on peut le voir sur la figure 2, les protubérances 22B coïncident parfaitement avec les protubérances 22A. Elles sont de même hauteur H et liées entre elles par leurs sommets 28B et 28A.

Par contre, les protubérances 24B et 24A, bien qu'en coïncidence, sont en contact moins intime. Cela tient au fait que leurs sommets 30A et 30B ne sont pas liés entre eux.

Les deuxièmes protubérances 24 ont une hauteur h qui est inférieure à la hauteur H commune aux premières protubérances 22A, 22B.

Les premières 22 et deuxièmes 24 protubérances de la première couche 12 sont imbriquées entre des troisièmes protubérances 26 formées par gaufrage dans la feuille 20 de la deuxième couche 14.

Les troisièmes protubérances 26 sont par exemple de forme et de densité équivalentes à celles des deuxièmes protubérances 24.

Dans le mode de réalisation illustré sur la figure 2, la hauteur H' des troisièmes protubérances 26 est légèrement inférieure à H de manière que les sommets 28A des premières protubérances 22A et les sommets 30A des deuxièmes protubérances 24A de la feuille 16 soient en contact avec la face interne de la feuille 20 de la deuxième couche, tandis que les sommets 32 des troisièmes protubérances 26 sont en contact avec les portions en vis-à-vis de la feuille interne de la face intérieure 16 de la première couche 14 qui sont situées entre des premières et/ou deuxièmes protubérances adjacentes.

Dans le mode de réalisation illustré sur la figure 2, la première couche 12 et la deuxième couche 14 sont liées entre elles par collage.

A cet effet, de la colle 34, comme cela sera expliqué par la suite, a été appliquée sur les sommets 28 et 30 et elle assure la liaison par collage des sommets des premières protubérances 22A et des deuxièmes protubérances 24A de la feuille intérieure 16 avec la feuille 20 de la deuxième couche.

La colle 34 apposée sur les sommets 28A ayant diffusé au travers de la feuille 16 assure également la liaison par collage entre eux des sommets 28A et 28B des premières protubérances 22A et 22B, complétant ainsi la liaison entre les feuilles intérieure 16 et extérieure 18 de la première couche 12 qui est également assurée du fait de leur gaufrage mécanique simultané comme cela sera expliqué par la suite.

Afin de clarifier la représentation, on a représenté un jeu, sur la figure 2, entre les sommets 28 et 30 et la face interne de la feuille 20 de la deuxième couche 14.

Grâce à la conception selon l'invention de la feuille multicouche 10, celle-ci présente une résistance suffisante et une bonne tenue, la rigidité se trouvant accrue du fait de la présence de colle 34 sur les sommet des premières et deuxièmes protubérances, tout en conservant une très grande sensation de douceur, pour l'utilisateur, de la feuille extérieure 18.

La feuille multicouche 10 conserve également bien entendu les avantages d'une feuille multicouche gaufrée qui procure une sensation d'épaisseur importante à son utilisateur.

En se reportant aux figures 2 à 6, on décrira maintenant un exemple d'un procédé pour la fabrication de la feuille multicouche 10.

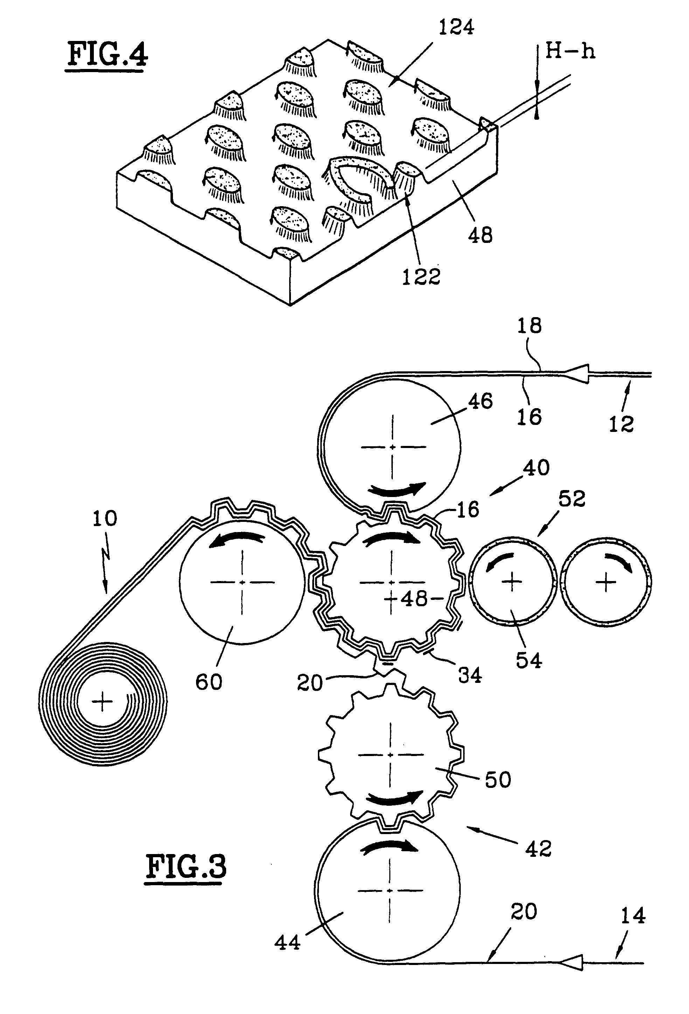

On a représenté schématiquement sur la figure 3 une installation, de conception générale classique permettant de mettre en oeuvre le procédé selon l'invention pour réaliser une feuille multicouche 10 également selon l'invention.

Cette installation comporte deux unités de gaufrage 40 et 42 constituées chacune d'un cylindre à revêtement en élastomère 44, 46 respectivement, coopérant avec un cylindre en acier gravé 48, 50 respectivement.

Les cylindres 48 et 50 sont gravés de façon à présenter en surface des éléments en relief et/ou des picots répartis aussi bien sur la circonférence, sens machine, que sur la largeur du cylindre, sens travers.

Les deux feuilles 16 et 18 qui vont constituer la première couche 12 sont entraînées depuis des bobines non représentées et sont guidées autour du cylindre 46.

Le cylindre 46 est pressé contre le cylindre 48 par des moyens appropriés, non représentés, de telle sorte que les feuilles 16 et 18, en passant entre eux, sont amenées à se déformer et à épouser le relief de gravure du cylindre 48 qui est illustré à la figure 4.

Les feuilles 16 et 18 gaufrées lors de leur passage entre les rouleaux 46 et 48 sont ensuite entraînées par ce dernier.

Un dispositif 52 d'encollage, connu en soi, dépose avec un cylindre applicateur 54 une substance adhésive 34 sur les sommets 28A et 30A des protubérances 22A et 24A de la feuille intérieure 16.

Les premières protubérances 22A et 22B ont été gravées simultanément par des premières parties en relief 122 du cylindre 48, tandis que les deuxièmes protubérances 24A et 24B ont été gravées simultanément par des deuxièmes parties en relief correspondantes 124 du cylindre 48.

Après leur passage entre les rouleaux 46 et 48, les deuxièmes protubérances 24A et 24B gaufrées simultanément présentent la même hauteur réduite h qui est inférieure à la hauteur H communes aux premières protubérances 22A et 22B réalisées simultanément.

En effet, comme on peut le voir sur le détail de la figure 4, les sommets des parties en relief 124 sont situés à une cote supérieure à celle des sommets des parties en relief 122, la différence d'altitude entre ces sommets étant égales H-h.

Lorsque les parties en relief 122, 124 sont obtenues par gravure ou par usinage, la hauteur est mesurée depuis le sommet de l'élément en relief qui est sensiblement plan en général, jusqu'au fond de la gravure.

Si les éléments sont rapportés, on procède de la même façon par différence de hauteurs, la référence étant le sommet des plus élevés des éléments.

La feuille 20 de la deuxième couche 14, entraînée depuis une bobine non représentée, subit un gaufrage analogue en passant entre les cylindres 44 et 50.

La surface du cylindre 50 comporte des troisièmes parties en relief 126 pour la réalisation par gaufrage des troisièmes protubérances 26 dans la feuille 20.

Ensuite la feuille 20 se détache de la surface du cylindre 50, et vient au contact de la feuille intérieure 16 de la première couche 12, sur une portion de sa course dans laquelle elle est encore appliquée contre la surface du cylindre gravé 48.

Les deux cylindres 48 et 50 sont entraînés à des vitesses synchrones et opposées et ils sont calés en rotation l'un par rapport à l'autre de façon que les protubérances 26 de la feuilles 20 viennent s'imbriquer entre les protubérances 22, et 24 de la premières couche 12.

Un cylindre 60, appelé cylindre marieur, à surface lisse et entraîné en rotation contre le cylindre 48 assure l'union des deux couches de la feuilles 10 en pressant la feuille 20 contre les sommets 28, 30 revêtus de colle 34 des protubérances de la première couche à feuille double 12.

La feuille multicouche 10 obtenue est ensuite découpée en feuilles de petite laize et mise en rouleaux, par exemple de papier toilette.

En pratique, la hauteur h des deuxièmes éléments en relief 124 sera au moins inférieure de 0,05 mm à la hauteur H des premiers éléments en relief 122, mais de préférence restera supérieure à la moitié de H en vérifiant la relation 0,5xH<h<H-0,05.

La hauteur H' des éléments en relief 126 du cylindre 50 est égale ou inférieure à celle H des premiers éléments 122 du cylindre 48.

En effet, si elle était supérieure, les troisièmes protubérances 26 formées dans le papier seraient écrasées et ramenées à la hauteur H lors du passage dans l'intervalle entre le cylindre marieur 60 et le cylindre gravé 48.

Les éléments en relief 126 du cylindre gravé 50 ont par exemple une répartition identique à celle des deuxièmes éléments 122 du premier cylindre gravé 48.

Il subsiste ainsi des zones sans relief dans lesquelles viennent s'emboîter les premiers éléments en relief 122.

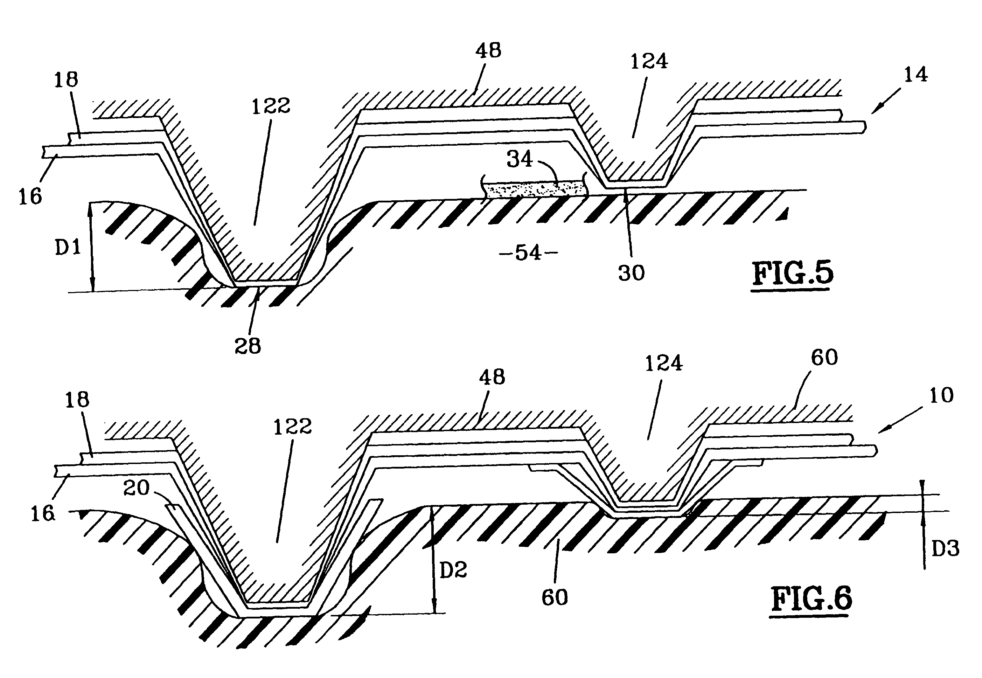

En référence aux figures 5 et 6, on explicitera maintenant plus en détail l'application de la colle 34 par le rouleau 54 et le mariage des deux couches par le cylindre marieur 60.

Comme cela est illustré sur la figure 5, et du fait de la différence de hauteur H-h entre les sommets des premières parties en relief 122 et des deuxièmes parties en relief 124 du cylindre gravé 48, la couche de colle 34 qui recouvre la surface cylindrique du rouleau applicateur 54 est appliquée sur les sommets 28 et 30, le rouleau 54 à revêtement en matériau élastomère exerçant une pression différente sur ces sommets.

En effet, la déflexion D1 du matériau élastomère du rouleau 54 est beaucoup plus importante au niveau des premières parties en relief 122, ce qui aboutit à faire traverser la colle 34 qui imprègne ainsi les sommets des premières protubérances 22A de la feuille intérieure 16 et qui traverse le papier de cette feuille pour imprégner les sommets des premières protubérances 22B de la feuille extérieure 18.

Le dépôt régulier de colle sur tous les sommets 30 est également fonction de la dureté du matériau du rouleau applicateur 54, de son épaisseur et de la qualité du matériau.

D'une manière similaire, et en se reportant à la figure 6, on voit que le matériau constitutif du cylindre marieur 60 subit une déflexion D2 beaucoup plus importante au niveau des premières parties en relief 122, que celle D3 qu'il subit au niveau des deuxièmes parties en relief 124.

Du fait de la pression spécifique très importante exercée par le cylindre marieur 60 au niveau des premières parties en relief 122, les trois feuilles restent liées et collées ensemble au niveau des premières protubérances 22.

Par contre, du fait de la pression spécifique réduite, exercée par le cylindre marieur au niveau des secondes parties en relief 124, il ne se produit qu'un collage des sommets 30A des deuxièmes protubérances 24A de la feuille intérieure 16 aux parties en vis-à-vis de la feuille 20. Il n'y a pas de collage entre les sommets 30B des deuxièmes protubérances 24B de la feuille extérieure 18 et 30A.

Ainsi, dès que le papier quitte la zone de coopération entre le cylindre marieur 60 et le cylindre gravé 48, la feuille multicouche 10 présente la structure illustrée à la figure 2 conforme aux enseignements de l'invention.

Le procédé selon l'invention permet donc, avec une installation classique, mais avec un choix approprié des matériaux constitutifs du rouleau applicateur 54 et du cylindre marieur 60 et avec des réglages précis des entraxes entre les différents rouleaux et cylindres, d'obtenir une feuille présentant la structure conforme aux enseignements de l'invention illustrés à la figure 2.

Toutefois, l'invention n'est pas limitée à des feuilles produites selon ce seul procédé de réalisation.

Il est par exemple concevable que les trois feuilles soient gravées séparément chacune au moyen d'une paire associant un cylindre gravé et un cylindre de pression, les trois feuilles présentant alors les profils illustrés à la figure 2, et étant ensuite liées entre elles par des opérations de collage aboutissant à la structure de la feuille multicouche 10.

L'invention n'est pas non plus limitée au mode de réalisation dans lequel la feuille 20 de la deuxième couche 14 comporte seulement des troisièmes protubérances.

En effet, le cylindre 50 peut comporter des troisièmes et des quatrièmes éléments en relief (non représentés) qui, après gaufrage de la feuille 20 produisent des troisièmes et quatrièmes protubérances à la surface de cette dernière.

Les hauteurs H' et h' des troisièmes et quatrièmes éléments en relief sont de préférence liées par la même relation dimensionnelle que H et h.

La deuxième couche 20 peut également être une feuille double.

## Revendications

1. Feuille multicouche (10) absorbante à au moins deux couches (12, 14) constituées chacune d'au moins une feuille (16, 18, 20) gaufrée de papier absorbant crêpé, de poids compris entre 10 et 40g/m² par feuille, avec une face externe formant la face externe de la feuille multicouche et une face interne, la face interne de la première couche (12) comportant des premières (22) et des deuxièmes (24) protubérances, lesdites secondes protubérances (24) présentant une hauteur moindre que les premières (22), et la face interne de la deuxième couche (14) comportant des troisièmes protubérances (26) imbriquées entre les protubérances (22, 24) de la première couche, les deux couches (12, 14) étant liées entre elles par une partie des sommets (28) des protubérances (22, 24) de la première couche (12) rendus solidaires, par collage, de la deuxième couche (14) entre deux troisièmes protubérances (26), **caractérisée en ce que** la première couche (12) est une feuille double constituée par :
- une feuille intérieure (16) dont la face interne comporte lesdites premières(22A) et deuxièmes (24A) protubérances ; et
- une feuille extérieure (18) dont la face interne comporte des premières protubérances (22B) coïncidant avec les premières protubérances (22A) de la feuille intérieure (16), et comporte des secondes protubérances (24B) coïncidant avec les deuxièmes protubérances (24A) de la feuille intérieure (16) ;
**en ce que** la liaison entre les deux couches est assurée par collage (34) par les sommets (28A, 30A) des premières (22A) protubérances de la première couche (12) et des deuxièmes protubérances (24A) de la feuille intérieure (16) de la première couche (12), et **en ce que** les sommets des premières protubérances (22A, 22B) des feuilles intérieure (16) et extérieure (18) sont liés par collage.

2. Feuille selon la revendication 1, **caractérisée en ce que** la hauteur (h) des deuxièmes protubérances (24B) de la feuille (18) est au moins égale à 50 % de la hauteur (H) des premières protubérances (22A, 22B).

3. Feuille selon l'une des revendications 1 ou 2, **caractérisée en ce que** les premières protubérances (22) sont réparties selon un motif espacé, plus d'une deuxième protubérance (24) étant disposée entre deux premières protubérances (22) successives.

4. Feuille selon l'une quelconque des revendications 1 à 3, **caractérisée en ce que** la surface encollée (34) des sommets (28) des premières protubérances (22A) de la feuille intérieure (16) représente entre 0,1 et 20 % de la surface de la feuille (10).

5. Feuille selon la revendication 4, **caractérisé en ce que** ladite surface encollée représente entre 1 et 5 % de la surface totale de la feuille (10).

6. Feuille selon l'une quelconque des revendications précédentes, **caractérisée en ce que** la surface encollée des sommets (30) des deuxièmes protubérances (24A) de la feuille intérieure (16) de la première couche (12) représente entre 0,1 et 20 % de la surface totale de la feuille (10).

7. Feuille selon l'une quelconque des revendications précédentes, **caractérisée en ce que** la hauteur (H') des troisièmes protubérances (26) est au plus égale à la hauteur (H) des premières protubérances (22).

8. Feuille selon la revendication 7, **caractérisée en ce que** la deuxième couche (14) comporte des quatrièmes protubérances dont la hauteur (h') est au moins égale à 50 % de la hauteur (H') des troisièmes protubérances (26).

9. Feuille selon l'une des revendications 7 ou 8, **caractérisée en ce que** les sommets (32) des troisièmes protubérances (26) forment une liaison par collage avec la première couche (12).

10. Procédé pour réaliser une feuille (10) selon l'une quelconque des revendications précédentes, **caractérisé en ce qu'**il consiste :
- à gaufrer la feuille intérieure (16) de la première couche (12) pour y réaliser les premières (22A) et deuxièmes (24A) protubérances; lesdites deuxièmes protubérances (24A) présentant une hauteur moindre que les premières (22A);
- à gaufrer la feuille extérieure (18) de la première couche (12) pour y réaliser les premières (22B) et deuxièmes (24B) protubérances lesdites deuxièmes protubérances (24B) présentant une hauteur moindre que les premières (22B);
- à assembler les feuilles intérieure (16) et extérieure (18) pour constituer la première couche (12) à feuille double de manière à faire coïncider les premières (22A), respectivement deuxièmes (24A) protubérances de la feuille intérieure (16) avec les premières (22B), respectivement deuxièmes (24B) protubérances de la feuille extérieure (18);
- à gaufrer la feuille (20) de la deuxième couche (14) pour y réaliser au moins lesdites troisièmes protubérances (26) ;
- à déposer de la colle (34) sur au moins une partie des sommets (28A, 30A) des premières (22A) et des deuxièmes(24A) protubérances de la feuille intérieure (16) de la première couche (12) ;
- à rapprocher la feuille double de la première couche (12) de la feuille (20) de la deuxième couche (14) de façon que les premières (22) et deuxièmes (24) protubérances de la feuille double (12) s'imbriquent entre les troisièmes protubérances (26) de la deuxième couche (14), de manière que les sommets encollés (28A) des premières protubérances (22A) de la feuille intérieure (16) de la première couche (12) adhèrent aux sommets des premières protubérances (22B) de la feuille extérieure (18) de la première couche (12), et à la feuille (20) de la deuxième couche (14) entre deux troisièmes protubérances (26), et de manière que les sommets encollés (30) des deuxièmes protubérances (24B) de la feuille intérieure (16) de la première couche (12) n'adhèrent qu'à la feuille (20) de la deuxième couche (14), entre deux troisièmes protubérances (26).

11. Procédé selon la revendication 10, **caractérisé en ce que** la feuille intérieure (16) et la feuille extérieure (18) de la première couche (12) sont gaufrées simultanément sur un premier cylindre gravé (48) comportant à sa surface des premiers (122) et seconds (124) éléments en relief, les seconds étant à une hauteur inférieure par rapport aux premiers, et **en ce que** les sommets (28A, 30A) des premières (22A) et des deuxièmes (24A) protubérances de la feuille intérieure (16) de la première couche (12) sont encollés simultanément par un même rouleau (54) applicateur (34) de colle qui coopère avec le premier cylindre (48) portant la feuille double gàufrée (16, 18).

12. Procédé selon la revendication 11, **caractérisé en ce qu'**il consiste à gaufrer la feuille (20) de la deuxième couche (14) sur un deuxième cylindre gravé (50) comportant au moins des troisièmes éléments en relief (126).

13. Procédé selon l'une des revendications 11 ou 12, **caractérisé en ce que** la liaison par collage entre les deux couches (12, 14) est assurée au moyen d'un rouleau marieur (60) qui coopère avec le premier cylindre gravé (48) portant la feuille double gaufrée (12) et la feuille (20) gaufrée de la deuxième couche imbriquées.

## Patentansprüche

1. Mehrschichtiges absorbierendes Blatt (10) mit zumindest zwei Schichten (12, 14), die jeweils aus mindestens einem geprägten Blatt (16, 18, 20) aus absorbierendem, gekrepptem Papier bestehen, mit einem Gewicht von zwischen 10 und 40 g/m² je Blatt, mit einer Außenfläche, die die Außenfläche des mehrschichtigen Blatts bildet, und einer Innenfläche, wobei die Innenfläche der ersten Schicht (12) erste (22) und zweite Vorsprünge (24) aufweist, wobei die zweiten Vorsprünge (24) eine geringere Höhe als die ersten Vorsprünge (22) aufweisen, und wobei die Innenfläche der zweiten Schicht (14) dritte Vorsprünge (26) aufweist, die zwischen den Vorsprüngen (22, 24) der ersten Schicht eingeschachtelt sind, wobei die beiden Schichten (12, 14) untereinander durch einen Teil der Spitzen (28) der Vorsprünge (22, 24) der ersten Schicht (12) verbunden sind, die durch Verkleben mit der zweiten Schicht (14) zwischen zwei dritten Vorsprüngen (26) fest verbunden sind, daß durch gekennzeichnet, daß die erste Schicht (12) ein doppeltes Blatt ist, bestehend aus:
- einem innenliegenden Blatt (16), dessen Innenfläche die genannten ersten (22A) und zweiten (24A) Vorsprünge aufweist, und
- einem außenliegenden Blatt (18), dessen Innenfläche erste Vorsprünge (22B) aufweist, die mit den genannten ersten Vorsprüngen (22A) des innenliegenden Blatts (16) übereinstimmen, und zweite Vorsprünge (24B) aufweist, die mit den genannten zweiten Vorsprüngen (24A) des innenliegenden Blatts (16) übereinstimmen;
wobei die Verbindung zwischen den beiden Schichten durch Verklebung (24) zwischen den Spitzen (28A, 30A) der ersten Vorsprünge (22A) der ersten Schicht (12) und den zweiten Vorsprüngen (24A) des innenliegenden Blatts (16) der ersten Schicht (12) gewährleistet ist, und wobei die Spitzen der ersten Vorsprünge (22A, 22B) des innenliegenden Blatts (16) und des außenliegenden Blatts (18) durch Verklebung miteinander verbunden sind.

2. Blatt nach Anspruch 1, **dadurch gekennzeichnet, daß** die Höhe (h) der zweiten Vorsprünge (24B) des Blatts (18) zumindest gleich 50% der Höhe (H) der ersten Vorsprünge (22A, 22B) ist.

3. Blatt nach Anspruch 1 oder 2, **dadurch gekennzeichnet, daß** die ersten Vorsprünge (22) in einem lockeren bzw. beabstandeten Muster angeordnet sind, wobei mehr als ein zweiter Vorsprung (24) zwischen zwei aufeinanderfolgenden ersten Vorsprüngen (22) angeordnet ist.

4. Blatt nach einem der Ansprüche 1 bis 3, **dadurch gekennzeichnet, daß** die mit Klebstoff versehene Fläche (34) der Spitzen (28) der ersten Vorsprünge (22A) des innenliegenden Blatts (16) zwischen 0,1 und 20 % der Oberfläche des Blatts (10) darstellt.

5. Blatt nach Anspruch 4, **dadurch gekennzeichnet, daß** die genannte mit Klebstoff versehene Fläche zwischen 1 und 5% der gesamten Oberfläche des Blatts (10) darstellt.

6. Blatt nach einem der vorangehenden Ansprüche, **dadurch gekennzeichnet, daß** die mit Klebstoff versehene Oberfläche der Spitzen (30) der zweiten Vorsprünge (24A) des innenliegenden Blatts (16) der ersten Schicht (12) zwischen 0,1 und 20% der gesamten Oberfläche des Blatts (10) darstellt.

7. Blatt nach einem der vorangehenden Ansprüche, **dadurch gekennzeichnet, daß** die Höhe (H') der dritten Vorsprünge (26) höchstens gleich der Höhe (H) der ersten Vorsprünge (22) ist.

8. Blatt nach Anspruch 7, **dadurch gekennzeichnet, daß** die zweite Schicht (14) vierte Vorsprünge aufweist, deren Höhe (h') zumindest gleich 50% der Höhe (H') der dritten Vorsprünge (26) ist.

9. Blatt nach einem der Ansprüche 7 oder 8, **dadurch gekennzeichnet, daß** die Spitzen (32) der dritten Vorsprünge (26) eine Klebeverbindung mit der ersten Schicht (12) bilden.

10. Verfahren zum Herstellen eines Blatts (10) nach einem der vorangehenden Ansprüche, **dadurch gekennzeichnet, daß** es folgende Schritte umfaßt:
- Prägen des innenliegenden Blatts (16) der ersten Schicht (12), um darauf die ersten (22A) und zweiten Vorsprünge (24A) herzustellen, wobei die genannten zweiten Vorsprünge (24A) eine geringere Höhe als die ersten Vorsprünge (22A) aufweisen;
- Prägen des außenliegenden Blatts (18) der ersten Schicht (12), um darauf die ersten (22B) und zweiten Vorsprünge (24B) herzustellen, wobei die genannten zweiten Vorsprünge (24B) eine geringere Höhe als die ersten Vorsprünge (22B) aufweisen;
- Zusammenfügen des innenliegenden (16) und außenliegenden (18) Blatts, um die erste Schicht (12) mit doppeltem Blatt herzustellen, auf eine solche Weise, daß die ersten (22A) bzw. die zweiten (24A) Vorsprünge des innenliegenden Blatts (16) mit den ersten (22B) bzw. zweiten (24B) Vorsprüngen des außenliegenden Blatts (18) übereinstimmen;
- Prägen des Blatts (20) der zweiten Schicht (14), um darauf zumindest die genannten dritten Vorsprünge (26) herzustellen;
- Aufbringen von Klebstoff (34) auf zumindest einen Teil der Spitzen (28A, 30A) der ersten (22A) und zweiten Vorsprünge (24A) des innenliegenden Blatts (16) der ersten Schicht (12);
- Annähern des doppelten Blatts der ersten Schicht (12) an das Blatt (20) der zweiten Schicht (14), so daß die ersten (22) und die zweiten Vorsprünge (24) des doppelten Blatts (12) sich zwischen die dritten Vorsprünge (26) der zweiten Schicht (14) einschachteln, so daß die mit Klebstoff versehenen Spitzen (28A) der ersten Vorsprünge (22A) des innenliegenden Blatts (16) der ersten Schicht (12) an den Spitzen der ersten Vorsprünge (22B) des außenliegenden Blatts (18) der ersten Schicht (12) und an dem Blatt (20) der zweiten Schicht (14) zwischen zwei dritten Vorsprüngen (26) ankleben, und so daß die mit Klebstoff versehenen Spitzen (30) der zweiten Vorsprünge (24B) des innenliegenden Blatts (16) der ersten Schicht (12) ausschließlich an dem Blatt (20) der zweiten Schicht (14) zwischen zwei dritten Vorsprüngen (26) ankleben.

11. Verfahren nach Anspruch 10, **dadurch gekennzeichnet, daß** das innenliegende Blatt (16) und das außenliegende Blatt (18) der ersten Schicht (12) gleichzeitig auf einem ersten gravierten Zylinder (48) geprägt werden, der auf seiner Oberfläche erste (122) und zweite vorstehende Elemente (124) aufweist, wobei die zweiten eine geringere Höhe im Vergleich zu den ersten aufweisen, und wobei die Spitzen (28A, 30A) der ersten (22A) und der zweiten Vorsprünge (24A) des innenliegenden Blatts (16) der ersten Schicht (12) gleichzeitig durch ein und dieselbe Walze (54) zur Klebstoffaufbringung (34) mit Klebstoff versehen werden, die mit dem ersten Zylinder (48), der das doppelte, geprägte Blatt (16, 18) trägt, zusammenwirkt.

12. Verfahren nach Anspruch 11, **dadurch gekennzeichnet, daß** es darin besteht, das Blatt (20) der zweiten Schicht (14) auf einem zweiten gravierten Zylinder (50) zu prägen, der zumindest dritte vorstehende Elemente (126) aufweist.

13. Verfahren nach einem der Ansprüche 11 oder 12, **dadurch gekennzeichnet, daß** die Verbindung durch Verklebung zwischen den beiden Schichten (12, 14) mittels einer Verbindungswalze (16) hergestellt wird, die mit dem ersten gravierten Zylinder (48) zusammenwirkt, der das doppelte geprägte Blatt (12) und das geprägte Blatt (20) der zweiten Schicht ineinander geschachtelt trägt.

## Claims

1. Absorbent multilayer web (10) comprising at least two layers (12, 14) each made up of at least one embossed ply (16, 18, 20) of absorbent crêpe paper having a weight of between 10 and 40 g/m² per ply, with an outer side forming the outer side of the multilayer web and an inner side, the inner side of the first layer (12) comprising first (22) and second (24) protrusions, said second protrusions (24) being of a lower height than the first (22), and the inner side of the second layer (14) comprising third protrusions (26) interlocked between the protrusions (22, 24) of the first layer, the two layers (12, 14) being bonded to one another by a portion of the tops (28) of the protrusions (22, 24) of the first layer (12), securely attached by gluing to the second layer (14) between two third protrusions (26), **characterised in that** the first layer (12) is a double ply constituted by:
- an inner ply (16), the inner side of which includes said first (22A) and second (24A) protrusions; and
- an outer ply (18), the inner side of which includes first protrusions (22B) coinciding with the first protrusions (22A) of the inner ply (16), and includes second protrusions (24B) coinciding with the second protrusions (24A) of the inner ply (16);
**in that** the bond between the two layers is ensured by gluing (34) at the tops (28A, 30A) of the first (22A) protrusions of the first layer (12) and of the second protrusions (24A) of the inner ply (16) of the first layer (12), and **in that** the tops of the first protrusions (22A, 22B) of the inner (16) and outer (18) ply are bonded by gluing.

2. Web according to claim 1, **characterised in that** the height (h) of the second protrusions (24B) of ply (18) is at least equal to 50% of the height (H) of the first protrusions (22A, 22B).

3. Web according to one of claims 1 or 2, **characterised in that** the first protrusions (22) are distributed in a spaced pattern, more than one second protrusion (24) being disposed between two successive first protrusions (22).

4. Web according to any one of claims 1 to 3, **characterised in that** the adhesive-coated surface (34) of the tops (28) of the first protrusions (22A) of the inner ply (16) represents between 0.1 and 20 % of the surface of the web (10).

5. Web according to claim 4, **characterised in that** said adhesive-coated surface represents between 1 and 5 % of the total surface of the web (10).

6. Web according to any one of the preceding claims, **characterised in that** the adhesive-coated surface of the tops (30) of the second protrusions (24A) of the inner ply (16) of the first layer (12) represents between 0.1 and 20 % of the total surface of the web (10).

7. Web according to any one of the preceding claims, **characterised in that** the height (H') of the third protrusions (26) is at least equal to the height (H) of the first protrusions (22).

8. Web according to claim 7, **characterised in that** the second layer (14) includes fourth protrusions, the height (h') of which is at least equal to 50 % of the height (H') of the third protrusions (26).

9. Web according to one of claims 7 or 8, **characterised in that** the tops (32) of the third protrusions (26) form an adhesive bond with the first layer (12).

10. Method of producing a web (10) according to any one of the preceding claims, **characterised in that** it consists in:
- embossing the inner ply (16) of the first layer (12) in order to produce in it the first (22A) and second (24A) protrusions, said second protrusions (24A) being of a lower height than the first (22A);
- embossing the outer ply (18) of the first layer (12) in order to produce in it the first (22B) and second (24B) protrusions, said second protrusions (24B) being of a lower height than the first (22B);
- assembling the inner ply (16) and outer ply (18) to constitute the first double-ply layer (12), in such a way as to make the first (22A), or respectively second (24A) protrusions of the inner ply (16) coincide with the first (22B), or respectively second (24B) protrusions of the outer ply (18);
- embossing the ply (20) of the second layer (14) in order to produce in it at least the said third protrusions (26);
- depositing adhesive (34) on at least a portion of the tops (28A, 30A) of the first (22A) and second (24A) protrusions of the inner ply (16) of the first layer (12);
- bringing the double ply of the first layer (12) close to the ply (20) of the second layer (14) in such a way that the first (22) and second (24) protrusions of the double ply (12) interlock between the third protrusions (26) of the second layer (14), such that the adhesive-coated tops (28A) of the first protrusions (22A) of the inner ply (16) of the first layer (12) adhere to the tops of the first protrusions (22B) of the outer ply (18) of the first layer (12), and to the ply (20) of the second layer (14) between two third protrusions (26), and such that the adhesive-coated tops (30) of the second protrusions (24B) of the inner ply (16) of the first layer (12) only adhere to the ply (20) of the second layer (14), between two third protrusions (26).

11. Method according to claim 10, **characterised in that** the inner ply (16) and the outer ply (18) of the first layer (12) are embossed simultaneously on a first engraved cylinder (48) comprising on its surface first (122) and second (124) raised elements, the second being of lower height than the first, and **in that** the tops (28A, 30A) of the first (22A) and second (24A) protrusions of the inner ply (16) of the first layer (12) are provided with adhesive simultaneously by the same roller (54) which applies (34) adhesive and co-operates with the first cylinder (48) bearing the embossed double ply (16, 18).

12. Method according to claim 11, **characterised in that** it consists in embossing the ply (20) of the second layer (14) on a second engraved cylinder (50) which comprises at least third raised elements (126).

13. Method according to one of claims 11 or 12, **characterised in that** the adhesive bond between the two layers (12, 14) is ensured by means of a joining roller (60) which cooperates with the first engraved cylinder (48) bearing the interlocked embossed double ply (12) and embossed ply (20) of the second layer.
